# FASCICULE DE BREVET EUROPEEN

(11) **EP 3 466 493 B1**
(45) Date de publication et mention de la délivrance du brevet: **23.09.2020**
(21) Numéro de dépôt: 18197277.9
(22) Date de dépôt: 27.09.2018
(51) Int. Cl.: A62B 35/00

(54) **HARNAIS**
GURTZEUG
HARNESS

(30) Priorité: 06.10.2017 FR 1759410
(43) Date de publication de la demande: 10.04.2019
(73) Titulaire: Zedel, 38920 Crolles (FR)
(72) Inventeur: EMONIN, Simon, 38000 Grenoble (FR); ROGER, Benoît, 38660 Saint Pancrasse (FR)
(74) Mandataire: Talbot, Alexandre

(56) Documents cités:
- EP-A1- 3 162 411
- WO-A1-2016/200896
- WO-A2-2013/063384
- JP-A- H10 248 949
- JP-A- 2001 129 105

## Description

### Domaine technique de l'invention

L'invention est relative à un harnais comportant un connecteur configuré pour faciliter l'attache simultanée et l'utilisation de plusieurs accessoires de sécurité.

### État de la technique

Dans le cadre d'une activité professionnelle, un cordiste ou travailleur acrobatique peut être amené à utiliser une multitudes d'équipements et notamment un descendeur, une longe ou un bloqueur de corde, en utilisant successivement l'un et l'autre des dispositifs.

Dans le domaine de l'élagage, les cordes et les points de fixation se déplacent autour et le long de l'arbre et fur et à mesure de l'intervention. Par ailleurs, il est classique d'utiliser une ligne de vie qui passe autour du tronc de l'arbre ou qui est fixée au tronc de l'arbre afin de pouvoir se placer dans une position confortable pour travailler de manière plus efficace qu'avec une seule corde sensiblement verticale.

Lors du travail d'élagage, il est nécessaire de se déplacer en continu d'un côté à l'autre du tronc de l'arbre ainsi que de s'éloigner ou se rapprocher du tronc. Pour faciliter le travail d'élagage, il est connu d'utiliser un harnais qui est pourvu de deux points de fixation latéraux de part et d'autre du plan sagittal de l'utilisateur. De manière classique, les points de fixation sont intégrés à la ceinture du harnais. Une corde passe autour du tronc et chacune des extrémités de la corde est fixée aux deux points de fixation du harnais.

Il apparait qu'au quotidien, cette configuration présente de nombreux inconvénients qui compliquent les travaux d'élagage. A titre d'exemple, l'ensemble formé par les points de fixation et la corde présente un encombrement important qui fait que l'amplitude de déplacement d'un côté ou de l'autre de l'arbre est limitée ce qui impose de modifier le point d'accrochage et/ou de travailler en extension complète, c'est-à-dire dans une position inconfortable.

En alternative au point de fixation monté sur la ceinture, il existe également des harnais où le point de fixation est disposé entre la ceinture et les tours de cuisses. De manière classique, le point de fixation est formé par un anneau qui peut s'ouvrir afin de pouvoir installer une corde formant une ligne de vie.

Il apparait également que ces deux configurations peuvent engendrer des problèmes d'ergonomie voire de sécurité en cas de mauvaise utilisation.

Le document EP3162411 divulgue un harnais muni d'un point de fixation latéral qui comporte deux anneaux distincts. Les deux anneaux sont fixés à un support lui-même monté sur la ceinture du harnais. Les deux anneaux sont fixés chacun au support au moyen d'une tige qui passe dans un orifice du support.

### Objet de l'invention

Un objet de l'invention consiste à remédier à ces inconvénients, et à prévoir un harnais comportant un point de fixation latéral qui permette une utilisation facilitée et une plus grande amplitude de mouvement ainsi qu'une amélioration de la sécurité.

On tend vers cet objet au moyen d'un harnais qui comprend une ceinture, une paire de tours de cuisse et des premier et deuxième points de fixation latéraux. Le harnais est remarquable en ce qu'au moins le premier point de fixation latéral comporte un connecteur fixé au moins à la ceinture, le connecteur comportant un élément de fermeture fixé à un corps.

Le connecteur est muni d'un corps définissant au moins une ouverture traversante à l'intérieur de laquelle passe un élément de fixation à la ceinture. L'élément de fermeture est monté amovible par rapport au corps. L'élément de fermeture et le corps définissent un anneau de connexion distinct de la au moins une ouverture traversante. L'anneau de connexion étant fermé lorsque l'élément de fermeture est fixé au corps. L'élément de fermeture et le corps définissent au moins un trou traversant distinct de la au moins une ouverture traversante et de l'anneau de connexion. L'élément de fermeture sépare l'anneau de connexion et le au moins un trou traversant.

Dans un développement, l'élément de fermeture et le corps définissent au moins deux trous traversants distincts de la au moins une ouverture traversante et de l'anneau de connexion. L'élément de fermeture sépare l'anneau de connexion et les aux moins deux trous traversants, les aux moins deux trous traversants étant alignés selon une direction perpendiculaire à l'axe longitudinal de la ceinture.

Dans un mode de réalisation particulier, le au moins un trou traversant est défini partiellement par une rainure dans le corps et une rainure dans l'élément de fermeture.

De manière avantageuse, le corps possède une première cavité coopérant avec une extrémité de l'élément de fermeture de sorte que ladite extrémité de l'élément de fermeture s'insère dans la cavité pour fermer l'anneau de connexion.

Préférentiellement, le corps possède une seconde cavité coopérant avec une lumière traversante de l'élément de fermeture de sorte que la seconde cavité soit dans le prolongement de la lumière traversante lorsque l'élément de fermeture ferme l'anneau de connexion.

Dans un mode de réalisation avantageux, la seconde cavité et la lumière traversante sont agencées pour autoriser l'introduction d'un bloqueur suivant un axe d'introduction qui est perpendiculaire à l'axe d'introduction de l'élément de fermeture dans la seconde cavité.

Il est avantageux de prévoir que le harnais comporte un élément filaire dont une première extrémité est fixée au premier connecteur au moyen du au moins un trou traversant, la deuxième extrémité de l'élément filaire étant fixée au deuxième point de fixation latéral.

Dans un mode de réalisation avantageux, l'élément filaire possède une première partie ayant une section inférieure à la section du au moins un trou traversant de manière à s'insérer dans ledit au moins un trou traversant et une deuxième partie ayant une section supérieure à la section du au moins un trou traversant de manière à former une butée de blocage, la butée de blocage étant séparée du deuxième point de fixation latéral par le connecteur du premier point de fixation latéral.

Préférentiellement, le corps définit une première ouverture traversante fixée à la ceinture par un premier élément de fixation et une première ouverture traversante fixée à un tour de cuisse par un premier élément de fixation.

Dans un autre développement, le deuxième point de fixation latéral comporte un connecteur fixé au moins à la ceinture, le connecteur étant muni d'un corps définissant :
- au moins une ouverture traversante à l'intérieur de laquelle passe un élément de fixation à la ceinture,
- un anneau de connexion distinct de la au moins une ouverture traversante, l'anneau de connexion étant fermé au moyen d'un élément de fermeture monté amovible,
et dans lequel l'élément de fermeture et le corps définissent au moins un trou traversant distinct de la au moins une ouverture traversante et de l'anneau de connexion, l'élément de fermeture séparant l'anneau de connexion et le au moins un trou traversant.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, en vue de dessus et en vue de 3/4, un premier mode de réalisation d'un connecteur avec un corps séparé de l'élément de fermeture,
- les figures 3 et 4 représentent, de manière schématique, en vue de dessus et en vue de 3/4, un élément de fermeture fixé au corps selon le premier mode de réalisation,
- la figure 5 représente, de manière schématique, un élément de fermeture fixé au corps selon le premier mode de réalisation avec une vue en coupe pour la fixation de l'élément de fermeture avec le corps du connecteur,
- la figure 6 et 7 représentent, de manière schématique, en vue de dessus et en vue de 3/4, un deuxième mode de réalisation d'un corps séparé de l'élément de fermeture,
- les figures 8 et 9 représentent, de manière schématique, en vue de dessus et en vue de 3/4, un élément de fermeture fixé au corps selon le deuxième mode de réalisation,
- la figure 10 représente, de manière schématique, un élément de fermeture fixé au connecteur selon le second mode de réalisation avec une vue en coupe pour la fixation de l'élément de fermeture avec le corps du connecteur,
- la figure 11 représente, de manière schématique, un harnais équipé de deux points de fixation latéraux muni d'un connecteur et d'un élément filaire,
- la figure 12 représente, de manière schématique, une vue agrandie d'un point de fixation latéral sur un harnais,
- les figures 13 et 14 représentent, de manière schématique, en vue de 3/4, un élément de fermeture fixé au corps et séparé du corps selon un mode de réalisation comportant un bloqueur de corde.

### Description d'un mode de réalisation préférentiel de l'invention

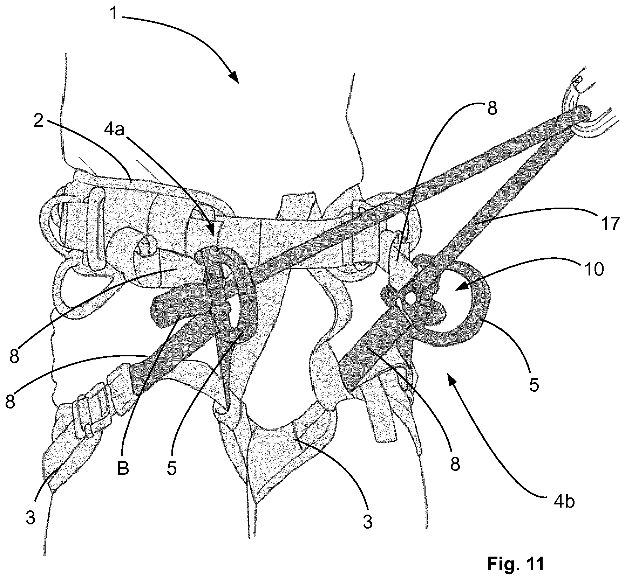

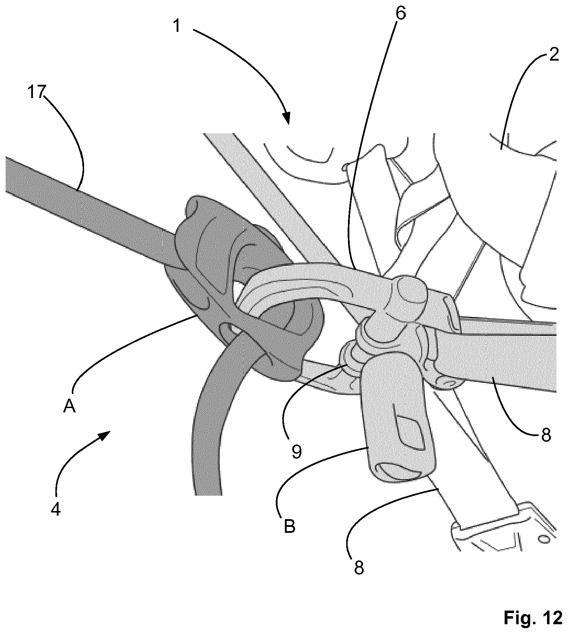

Comme cela est illustré aux figures 11 et 12, un harnais 1 selon l'invention comporte une ceinture 2 et une paire de tours de cuisse 3, et est apte à être associé à une paire de bretelles montée de manière amovible ou inamovible sur la ceinture 2.

Le harnais 1 comprend éventuellement un point de suspension ventral qui est configuré pour faire la connexion mécanique entre un point d'amarrage et la ceinture 2 du harnais 1 lorsque l'utilisateur est suspendu dans le harnais 1. Le harnais 1 peut également comporter un point de fixation dorsal en association avec des bretelles.

Afin de faciliter le travail en hauteur et notamment le travail d'élagage, le harnais 1 possède deux points de fixation latéraux 4a et 4b qui sont disposés de part et d'autre du plan sagittal de l'utilisateur. Le harnais 1 possède donc un premier point de fixation latéral 4a et un deuxième point de fixation latéral 4b qui peuvent être indépendamment un point de fixation droit ou un point de fixation gauche.

Les premier et le deuxième points de fixation latéraux 4a et 4b sont fixés au moins à la ceinture 2. Dans un mode de réalisation, les points de fixation latéraux 4a et 4b sont fixés à la ceinture 2 de manière inamovible. Cependant, il est encore possible de prévoir que les points de fixation 4a et 4b ou au moins un des points de fixation soit installé de manière amovible par rapport à la ceinture 2.

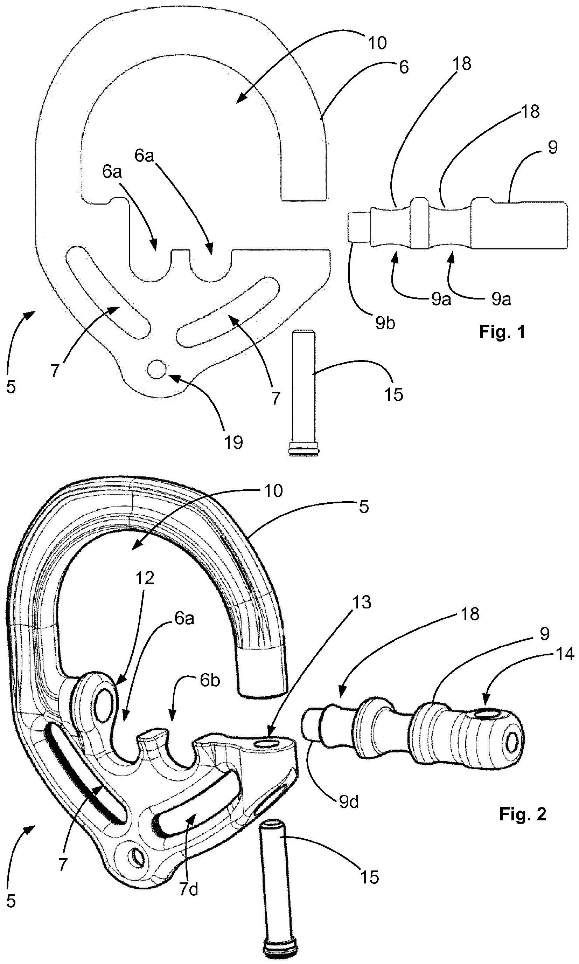

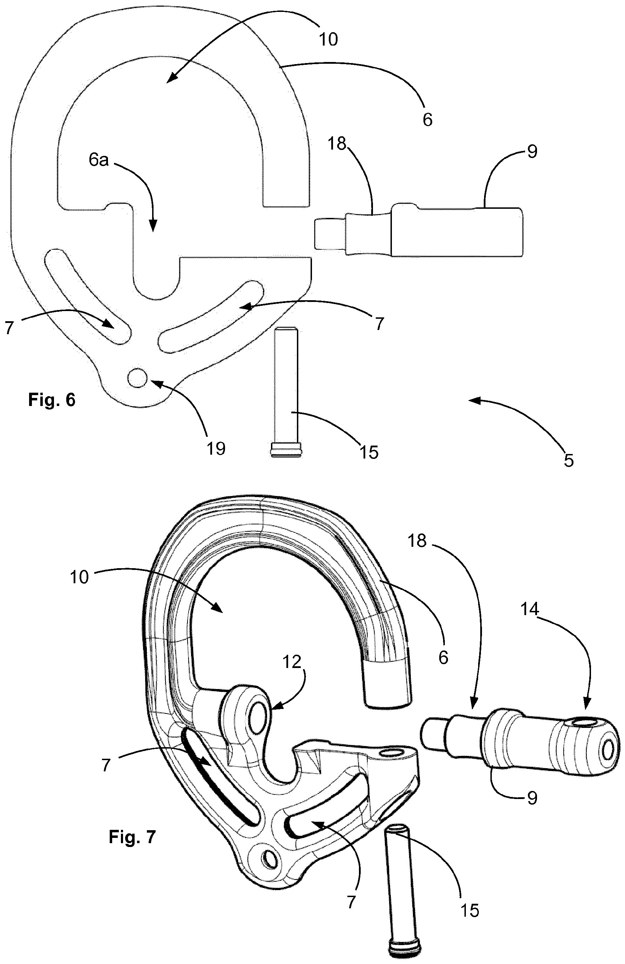

Comme cela est illustré aux figures 1 à 14, le point de fixation 4 qui peut être le premier point de fixation 4a et/ou le deuxième point de fixation 4b comporte un connecteur 5 qui est fixé à la ceinture 2. Le connecteur 5 est muni d'un corps 6 qui définit au moins une ouverture traversante 7 à l'intérieure de laquelle passe un élément de fixation 8 à la ceinture 2. L'élément de fixation 8 est par exemple une ou plusieurs sangles qui sont fixées ou définissent la ceinture 2.

Dans le mode de réalisation illustré, le connecteur possède deux ouvertures traversantes 7 qui sont respectivement connectées à la ceinture 2 et à un tour de cuisse 3. Le deuxième élément de fixation 8 est par exemple une ou plusieurs sangles qui sont fixées ou définissent un tour de cuise 3. Cette configuration permet une meilleure répartition des efforts entre le bassin de l'utilisateur et ses jambes. Cette configuration permet également à l'utilisateur de mieux répartir son poids.

Il est particulièrement avantageux de définir une ouverture traversante 7 pour chaque élément de connexion 8 au lieu d'une seule ouverture qui regroupe les deux éléments de connexion 8 car cela permet de mieux répartir les efforts et de mieux définir le mouvement du connecteur 5 par rapport à la ceinture 2 et au tour de cuisse 3.

Dans le mode de réalisation illustré, les deux ouvertures traversantes 7 sont incurvées et le rayon de courbure est orienté vers le point de fixation, c'est-à-dire pour s'éloigner de la ceinture 2. Il apparait également qu'il est particulièrement avantageux de prévoir que les deux ouvertures traversantes 7 définissent sensiblement un arc de cercle. Cette configuration permet une meilleure rotation du connecteur 5 afin de suivre les mouvements de l'utilisateur.

Le connecteur 5 comporte également un élément de fermeture 9 qui est monté de manière amovible avec le corps 6. En d'autres termes, l'élément de fermeture 9 peut être fixé au corps 6 et il peut également être démonté. Dans un mode de réalisation, le corps 6 et l'élément de fermeture 9 sont réalisés dans un matériau métallique, par exemple en acier ou en alliage d'aluminium.

Le corps 6 et l'élément de fermeture 9 définissent le pourtour d'un anneau de connexion 10. L'anneau de connexion 10 est distinct de la au moins une ouverture traversante 7, c'est-à-dire de la zone de fixation entre la ceinture 2 et le connecteur 5. De cette manière, les équipements qui sont installés dans l'anneau de connexion 10 ne gênent pas la fixation à la ceinture 2 et son éventuelle mobilité. Cela permet également un démontage partiel du connecteur 5 sans rompre la connexion mécanique avec la ceinture 2 et éventuellement le tour de cuisse 3. Cela permet, d'éviter un mauvais remontage du connecteur 5, par exemple dans une position qui use prématurément l'élément de fixation 8.

L'anneau de connexion 10 est un anneau fermé dont la fermeture est assurée par la fixation de l'élément de fermeture 9 avec le corps 6. Lorsque l'élément de fermeture 9 n'est pas fixé au corps 6, l'anneau de connexion 10 n'est pas fermé. Cette configuration permet d'installer et de retirer simplement un équipement en enlevant l'élément de fermeture 9. A titre d'exemple, la figure 12 illustre l'installation d'un bloqueur de corde A dans un anneau de connexion 10. L'équipement installé possède avantageusement un orifice traversant qui coopère avec le pourtour de l'anneau de connexion 10 ce qui évite l'utilisation d'un connecteur additionnel de type mousqueton ou manille. La sécurité est améliorée en éliminant un élément superflu et l'équipement est intégré au plus près de l'utilisateur ce qui limite l'encombrement du point de fixation latéral 4. L'équipement peut également être un élément textile qui définit une boucle cousue. Dans la mesure où la boucle est cousue, la sécurité peut être améliorée par rapport à un nœud réalisé par l'utilisateur.

L'élément de fermeture 9 et le corps 6 définissent également au moins un trou traversant 11 distinct de la au moins une ouverture traversante 7 et de l'anneau de connexion 10. L'élément de fermeture 9 est disposé de manière à séparer l'anneau de connexion 10 et le au moins un trou traversant 11. Comme précédemment, le trou traversant 11 est défini au moyen d'un anneau fermé qui est formé partiellement par le corps 6 et partiellement par l'élément de fermeture 9.

Le connecteur 5 définit au moins trois trous distincts 7, 10 et 11 qui permettent de fonctionnaliser le connecteur 5.

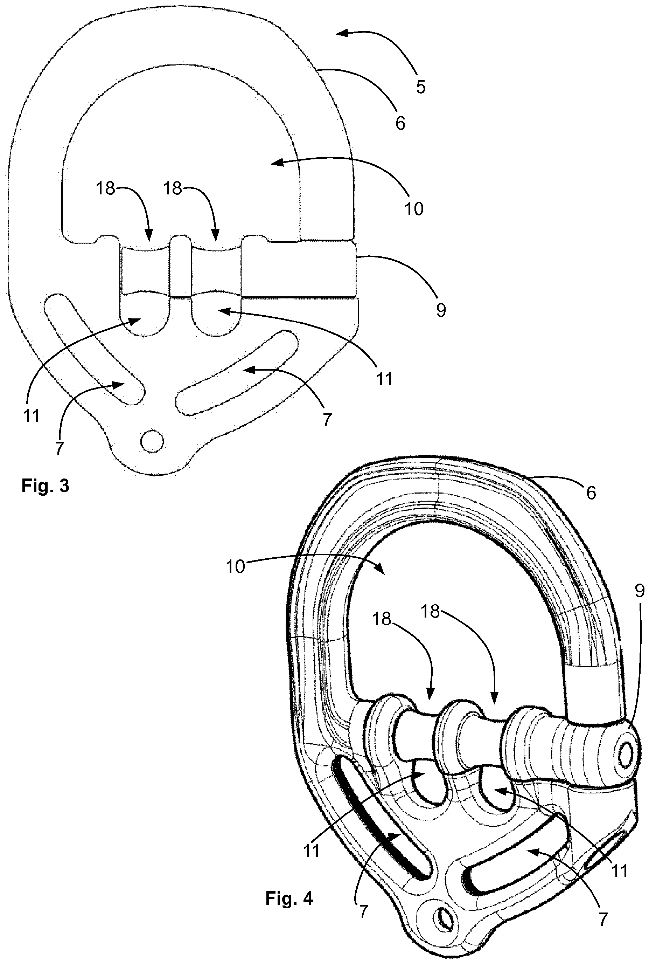

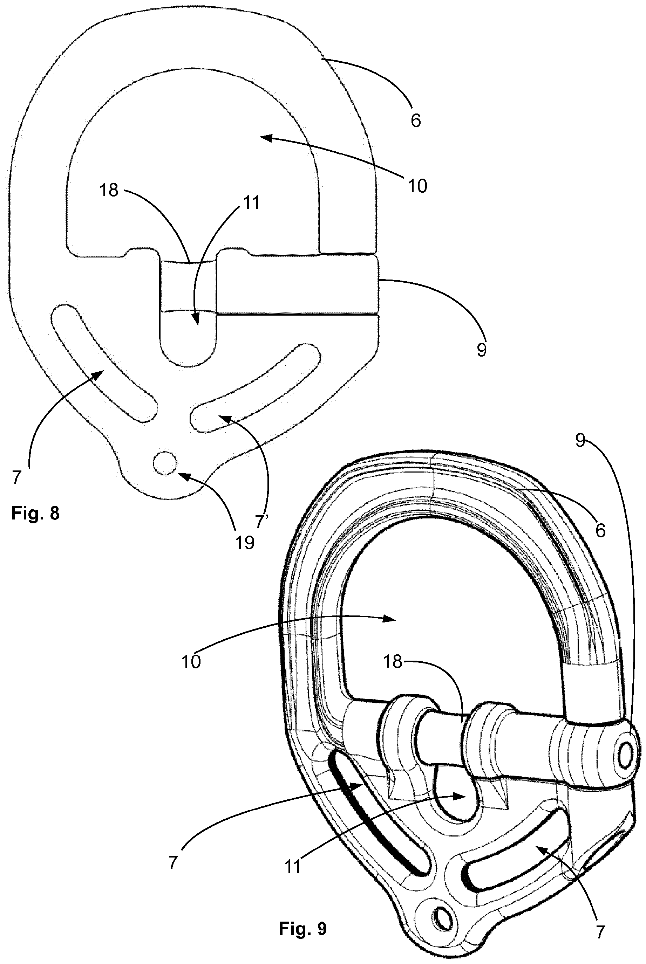

Dans un mode de réalisation avantageux illustré à la figure 3 et à la figure 8, le trou traversant 11 est disposé entre l'ouverture traversante 7 et l'anneau de connexion 10. De manière encore plus avantageuse, l'ouverture traversante 7, le trou traversant 11 et l'anneau de connexion 10 sont alignés.

Dans le mode de réalisation illustré aux figures 1 à 5, l'élément de fermeture 9 et le corps 6 définissent au moins deux trous traversants 11 distincts de la au moins une ouverture traversante 7 et de l'anneau de connexion 10. Dans le mode de réalisation illustré, seulement deux trous 11 sont définis dans le connecteur 5. L'élément de fermeture 9 sépare l'anneau de connexion 10 et les trous traversants 11. De manière particulièrement avantageuse, les trous traversants 11 sont alignés selon une direction perpendiculaire à l'axe longitudinal de la ceinture 2. Les trous 11 ayant une section circulaire ou sensiblement circulaire, l'axe qui relie les centres des cercles est parallèle à l'axe transversal de la ceinture 2.

De manière encore plus avantageuse, l'axe qui relie les centres des cercles est parallèle à un axe de rotation du connecteur 5 par rapport à la ceinture 2. L'axe de rotation du connecteur est défini par les ouvertures traversantes 7 et les éléments de connexion 8 associés.

Il est particulièrement avantageux de prévoir que le ou les trous traversants 11 soient définis partiellement dans le corps 6 et dans l'élément de fermeture 9 afin de faciliter l'insertion d'un équipement dans le trou traversant 11.

A titre d'exemple, le ou les trous traversants 11 sont définis partiellement par une rainure 6a dans le corps 6 et une rainure 9a dans l'élément de fermeture 9. La rainure présente préférentiellement une section en arc de cercle, par exemple en demi-cercle. Cependant, afin de faciliter l'insertion d'un équipement dans le trou traversant 11, il est particulièrement avantageux de prévoir que la plus grande partie du trou traversant 11 soit définie dans le corps 6.

Il est alors possible d'installer un équipement, par exemple une corde formant une ligne de vie dans le trou traversant 11. Comme illustré aux figures 11 et 12, l'équipement possède une butée de blocage B qui empêche l'installation ou le retrait de l'équipement sans le démontage de l'élément de fermeture 9. Cette solution assure une meilleure sécurité en comparaison d'un trou traversant défini intégralement dans le corps et qui oblige de former un nœud à l'extrémité de la corde.

Dans un mode de réalisation particulièrement avantageux et illustré aux figures 1 à 10, le corps 6 possède une première cavité 12 coopérant avec une extrémité 9b de l'élément de fermeture 9 de sorte que ladite extrémité 9b de l'élément de fermeture 9 s'insère dans la cavité 12 pour fermer l'anneau de connexion 10. La première cavité 12 peut être un trou borgne comme cela est représenté sur les différentes figures, mais il est également possible d'utiliser un trou traversant ou une pluralité d'éléments en saillie. Dans cette configuration, le corps 6 possède une cavité 12 qui coopèrent avec une extrémité 9b de l'élément de fermeture 9 afin d'imposer un déplacement dans une seule direction pour fermer l'anneau de connexion 10.

De cette manière, lorsqu'un effort est appliqué par un équipement situé dans le trou traversant 11, une partie de cet effort appliqué sur l'élément de fermeture 9 est repris par la cavité 12 formée dans le corps 6 et donc par le corps 6.

Dans le mode de réalisation illustré aux figures 1 à 10, le ou les trous traversants 11 sont disposés entre la première cavité 12 du corps 6 qui coopère avec l'extrémité de l'élément de fermeture 9 et l'autre extrémité de l'élément de fermeture 9 qui est également fixée au corps 6 afin de fermer l'anneau de connexion 10. De cette manière, les efforts appliqués à l'élément de fermeture 9 par tout équipement se trouvant dans un trou traversant 11 sont mieux repris par le corps 6.

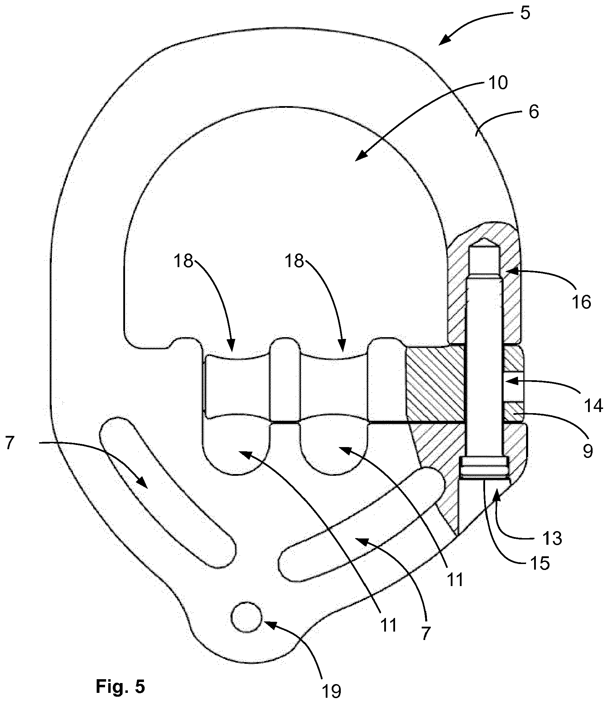

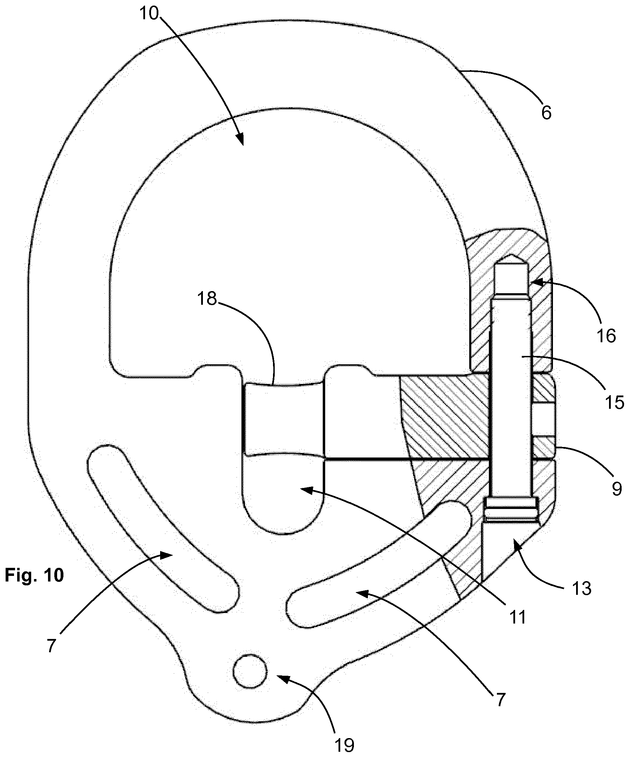

Il est également avantageux de prévoir que le corps 6 possède une seconde cavité 13 qui est configurée pour coopérer avec une cavité 14 de l'élément de fermeture 9 de sorte que la seconde cavité 13 soit dans le prolongement de la cavité 14 lorsque l'élément de fermeture 9 ferme l'anneau de connexion 10. Comme cela est illustré aux figures 5 et 10, le corps 6 possède une cavité 13 traversante qui débouche dans la zone de contact avec l'élément de fermeture 9. L'élément de fermeture 9 possède également une cavité 14 qui vient en vis-à-vis de la cavité 13 traversante du corps 6 ce qui permet l'insertion d'un bloqueur 15 qui vient empêcher le retrait de l'élément de fermeture 9.

De manière avantageuse illustrée aux figures 5 et 10, le corps 6 possède une deuxième cavité 16 qui est avantageusement non débouchante et qui se trouve dans l'alignement de la cavité 13 et de la cavité débouchante 14 de l'élément de fermeture 9 ce qui permet l'insertion du bloqueur 15 dans le corps 6 de part et d'autre de l'élément de fermeture 9.

Cette configuration permet de mieux fixer le bloqueur 15 dans le connecteur 5. Préférentiellement, un taraudage est formé dans au moins une des cavités de corps 6 et coopère avec un filetage du bloqueur 15. Le bloqueur peut être une vis, mais d'autres modes de réalisations sont possibles.

Dans un mode de réalisation particulier, la seconde cavité 13 et la lumière traversante 14 de l'élément de fermeture 9 sont agencées pour autoriser l'introduction d'un bloqueur 15 suivant un axe d'introduction qui est perpendiculaire à l'axe d'introduction de l'élément de fermeture 9 dans la première cavité 12. Ce mode de réalisation est illustré aux figures 5 et 10.

De manière particulièrement avantageuse, le bloqueur 15 est configuré pour empêcher le retrait de l'élément de fermeture et assurer la continuité mécanique du corps 6. Il est particulièrement avantageux de prévoir que le bloqueur 15 possède un appui mécanique avec le corps de chaque côté de l'élément de fermeture, c'est-à-dire dans les cavités 13 et 16 pour augmenter la tenue mécanique de l'anneau de connexion 10.

Comme cela est illustré aux figures 11 et 12, le corps 6 et l'élément de fermeture 9 coopèrent avec un élément filaire 17 qui est inséré dans au moins un des trous traversants. L'élément filaire 17 peut être une corde ou une sangle. De manière avantageuse, l'élément filaire 17 possède une section circulaire et le trou traversant 11 présente également une section circulaire ce qui facilite l'utilisation de l'élément filaire 17.

Le premier point de fixation latéral 4a comporte un élément filaire 17 dont une première extrémité est fixée au connecteur 5 au moyen du au moins un trou traversant 11. La deuxième extrémité de l'élément filaire 17 est fixée au deuxième point de fixation latéral 4b.

De manière particulièrement avantageuse, l'élément filaire 17 possède une première partie ayant une section inférieure ou égale à la section du au moins un trou traversant 11 de manière à s'insérer dans ledit au moins un trou traversant 11. L'élément filaire 17 possède également une deuxième partie ayant une section supérieure à la section du au moins un trou traversant 11 de manière à former une butée de blocage B. La butée de blocage B est séparée du deuxième point de suspension latéral 4b par le premier point de suspension latéral 4a.

Dans cette configuration, la butée de blocage est intégrée au plus près du connecteur 5 ce qui limite l'encombrement total du premier point de fixation latéral.

De manière avantageuse, la butée de blocage B est dépourvue d'un nœud ou comporte un nœud cousu afin d'améliorer la sécurité sans augmenter l'encombrement.

Il est particulièrement avantageux de prévoir que le deuxième point de fixation latéral 4b soit formé par un connecteur 5 qui comporte les caractéristiques techniques qui viennent d'être présentées. Dans un mode de réalisation, les deux connecteurs 5 sont strictement identiques.

Dans le mode de réalisation illustré à la figure 11 et qui peut également être utilisé dans le mode de réalisation de la figure 12, les deux extrémités de l'élément filaire 17 sont formées par une butée non-démontable. Par exemple, la butée est formée par une couture, par exemple un nœud rendu non démontable au moyen d'un couture ou un pli de l'élément filaire cousu. Cette configuration permet d'augmenter fortement la sécurité en éliminant la possibilité de former un nœud à une extrémité de l'élément filaire car le nœud peut évoluer dans le temps.

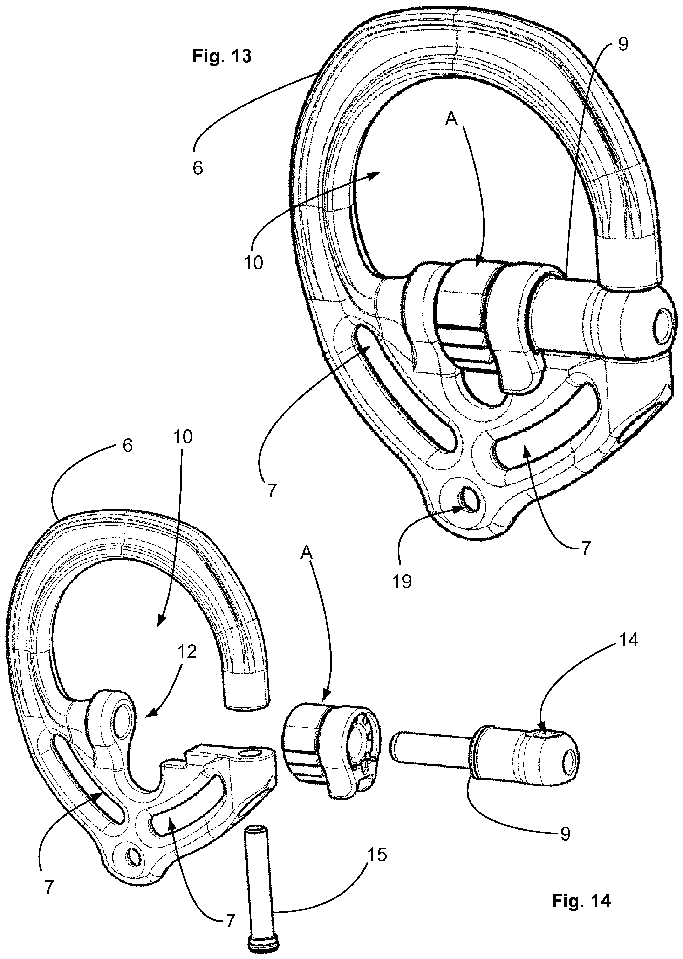

Dans une alternative de réalisation, le corps 6 ou l'élément de fermeture 9 de l'un des connecteurs 5 comporte un bloqueur d'élément filaire (non représenté) dans le mode de réalisation illustré aux figures 13 et 14. Le bloqueur d'élément filaire est avantageusement un bloqueur à came dont la came est montée sur un axe de rotation. L'axe de rotation peut être confondu avec l'axe longitudinal de l'élément de fermeture 9 si la came est montée sur l'élément de fermeture 9. En alternative, l'axe de rotation peut être intégré dans le corps 6 si le bloqueur à came est monté dans le corps 6.

Il est particulièrement avantageux de former le bloqueur à came dans l'élément de fermeture 9 car la fonctionnalité peut être installée ou retirée en changeant simplement l'élément de fermeture 9 par un élément de fermeture 9 comportant ou dépourvu du bloqueur à came.

L'utilisation d'un bloqueur à came est particulièrement avantageuse car la came est configurée pour bloquer l'élément filaire 17 et est avantageusement configurée pour être autobloquant au moyen de la forme de la came et/ou au moyen d'un ressort qui est configuré pour appliquer une pression sur l'élément filaire 17. De cette manière, l'élément filaire 17 est bloqué et la longueur de l'élément filaire 17 est fixe.

Dans la mesure où la came est intégrée dans le connecteur 5, l'encombrement du point de fixation est minimal et l'utilisateur peut profiter de toute la longueur disponible de corde entre les deux points de fixation. Dans l'art antérieur, il était nécessaire de faire un nœud à une extrémité de l'élément filaire 17 ou d'accrocher l'élément filaire 17 au moyen d'une manille ou d'un mousqueton. L'autre extrémité pouvait être fixée à un bloqueur qui était lui-même fixé au point de fixation par mousqueton ou une manille. Il apparait clairement que la distance entre le bord de la ceinture 2 et l'extrémité utile de l'élément filaire 17 est relativement importante ce qui complique le travail de l'utilisateur.

Le connecteur 5 permet d'augmenter la longueur utilisable d'élément filaire 17 en améliorant l'intégration de l'élément filaire 17 dans le premier point de fixation latéral. Un travail équivalent peut être réalisé pour le deuxième point de fixation voire encore augmenté en intégrant directement un bloqueur d'élément filaire 17 dans le connecteur 5.

Bien entendu, il est possible d'installer un bloqueur de corde dans chaque point de fixation. Dans le mode de réalisation illustré à la figure 12, un bloqueur de corde est installé dans l'anneau de connexion après démontage de l'élément de fermeture 9. Il est également possible de prévoir qu'un trou traversant 11 soit configuré pour autoriser l'insertion du bloqueur A de la figure 12. Le bloqueur est alors monté à rotation autour de l'élément de fermeture 9.

Il est également avantageux de prévoir que l'élément de fermeture définit une rainure 18 autour de l'élément de fermeture 9 dans le prolongement du trou traversant 11. Cette rainure permet une meilleure interaction entre l'élément filaire 17 et le connecteur 5. De manière avantageuse, l'élément de fermeture 9 possède une rainure qui fait le tour de l'élément de fermeture, c'est-à-dire qui est dans le prolongement de la rainure 9a.

Il est particulièrement avantageux d'installer le trou traversant 11 à proximité de l'axe de rotation du point de fixation latéral 4 car cela permet de faciliter l'utilisation du point de fixation lorsque l'utilisateur est retenu par la ligne de vie qui est fixée au trou traversant 11. L'anneau de fixation 10 est tiré vers l'avant par la tension sur la ligne de vie sans être gêné par la ligne de vie.

Dans le mode de réalisation illustré à la figure 11, les deux anneaux de connexion 10 sont facilement accessibles à l'extérieur de l'espace occupé par la ligne de vie.

Le mode de réalisation illustré à la figure 11 présente un connecteur 5 qui définit deux ouvertures traversantes 7 dont une est associée à un élément filaire et l'autre est laissé libre. Il est avantageux d'utiliser la deuxième ouverture traversante 7 avec un deuxième élément filaire qui est fixé à un deuxième connecteur. L'utilisateur peut alors utiliser deux points de fixation différents avec deux lignes de vie différentes ce qui facilite son travail au quotidien. Le deuxième élément filaire peut avoir les mêmes caractéristiques que le premier élément filaire.

Dans les différents modes de réalisation illustrés, le corps 6 possède un élément d'accrochage 19 d'un porte-sellette. Le porte-sellette n'est pas illustré. L'élément d'accrochage 19 du porte-sellette est représenté par un trou disposé dans la partie inférieure du corps. Il est particulièrement avantageux d'utiliser un élément d'accrochage 19 qui se trouve entre les deux ouvertures traversantes 7 et de préférence à équidistance des deux ouvertures traversantes 7 et encore plus préférentiellement selon un plan de symétrie des deux ouvertures traversantes 7 afin que l'installation de l'utilisateur sur son porte sellette ne modifie l'orientation des connecteurs ou que les déplacements de l'utilisateur autour de son point d'attache ne se traduise pas un glissement hors du porte-sellette.

Dans les modes de réalisation illustrés, l'élément d'accrochage 19 est un trou qui est destiné à coopérer avec un connecteur comme par exemple un mousqueton ou une manille, ou alors avec une corde ou une sangle. Il est particulièrement avantageux d'utiliser un mousqueton ou une manille si l'on souhaite démonter le porte-sellette. Pour une utilisation à demeure, il est possible d'utiliser une corde ou une sangle.

Dans une alternative de réalisation, le trou 19 peut être remplacé par une zone en saillie qui peut avoir la forme d'un crochet. Cependant, une telle configuration est moins avantageuse car l'élément en saillie peut s'accrocher à l'utilisateur ou à une branche.

La configuration proposée permet un très bon alignement entre la sellette et le connecteur 5 sans perturber l'interaction entre le connecteur 5 et l'élément filaire qui assure le maintien de l'utilisateur au point d'ancrage.

## Revendications

1. Harnais (1) comportant une ceinture (2), une paire de tours de cuisse (3) et des premier et deuxième points de fixation latéraux (4, 4a, 4b), dans lequel au moins le premier point de fixation latéral (4a) comporte un connecteur (5) fixé à la ceinture (11), le connecteur (5) étant muni d'un corps (6) définissant au moins une ouverture traversante (7) à l'intérieure de laquelle passe un élément de fixation (8) à la ceinture (2), **caractérisé en ce que** le connecteur (5) est muni d'un élément de fermeture (9) monté amovible par rapport au corps (6), et dans lequel l'élément de fermeture (9) et le corps (6) définissent :
• un anneau de connexion (10) définissant un orifice de connexion distinct de la au moins une ouverture traversante (7), l'anneau de connexion (10) étant fermé au moyen dudit élément de fermeture (9), et
• au moins un trou traversant (11) distinct de la au moins une ouverture traversante (7) et de l'orifice de connexion, l'élément de fermeture (9) séparant l'orifice de connexion et le au moins un trou traversant (11).

2. Harnais (1) selon la revendication 1, dans lequel l'élément de fermeture (9) et le corps (6) définissent au moins deux trous traversants (11) distincts de la au moins une ouverture traversante (7) et de l'anneau de connexion (10), l'élément de fermeture (9) séparant l'anneau de connexion (10) et les aux moins deux trous traversant (11), les aux moins deux trous traversants (11) étant avantageusement alignés selon une direction perpendiculaire à l'axe longitudinal de la ceinture (2).

3. Harnais (1) selon l'une quelconque des revendications 1 ou 2, dans lequel le au moins un trou traversant (11) est défini partiellement par une rainure (6a) dans le corps (6) et une rainure (9a) dans l'élément de fermeture (9).

4. Harnais (1) selon l'une quelconque des revendications précédentes, dans lequel le corps (6) possède une première cavité (12) coopérant avec une extrémité (9b) de l'élément de fermeture (9) de sorte que ladite extrémité (9b) de l'élément de fermeture (9) s'insère dans la première cavité (12) pour fermer l'anneau de connexion (10).

5. Harnais (1) selon l'une quelconque des revendications précédentes, dans lequel le corps (6) possède une seconde cavité (13) coopérant avec une lumière traversante (14) de l'élément de fermeture (9) de sorte que la seconde cavité (13) soit dans le prolongement de la lumière traversante (14) lorsque l'élément de fermeture (9) ferme l'anneau de connexion (10).

6. Harnais (1) selon la combinaison des revendications 4 et 5, dans lequel la seconde cavité (13) et la lumière traversante (14) sont agencées pour autoriser l'introduction d'un bloqueur (15) suivant un axe d'introduction qui est perpendiculaire à l'axe d'introduction de l'élément de fermeture (9) dans la première cavité (12).

7. Harnais (1) selon l'une quelconque des revendications précédentes, dans lequel le premier point de fixation latéral (4a) comporte un élément filaire (17) dont une première extrémité est fixée au premier connecteur (5) au moyen du au moins un trou traversant (11), la deuxième extrémité de l'élément filaire (17) étant fixée au deuxième point de fixation latéral (4b).

8. Harnais (1) selon la revendication précédente, dans lequel l'élément filaire (17) possède une première partie ayant une section inférieure à la section du au moins un trou traversant (11) de manière à s'insérer dans ledit au moins un trou traversant (11) et une deuxième partie ayant une section supérieure à la section du au moins un trou traversant (11) de manière à former une butée de blocage (B), la butée de blocage (B) étant séparée du deuxième point de fixation latéral (4b) par le connecteur (5) du premier point de fixation latéral (4a).

9. Harnais (1) selon l'une quelconque des revendications précédentes, dans lequel le corps (6) définit une première ouverture traversante (7) fixée à la ceinture (2) par un premier élément de fixation (8) et une deuxième ouverture traversante (7) fixée à un tour de cuisse (3) par un deuxième élément de fixation.

10. Harnais (1) selon l'une quelconque des revendications précédentes, dans lequel le deuxième point de fixation latéral comporte un connecteur (5) fixé à la ceinture (2), le connecteur (5) étant muni d'un corps (6) définissant :
• au moins une ouverture traversante (7) à l'intérieure de laquelle passe un élément de fixation (8) à la ceinture (2),
• un anneau de connexion (10) distinct de la au moins une ouverture traversante (7), l'anneau de connexion (10) étant fermé au moyen d'un élément de fermeture (9) monté amovible,
et dans lequel l'élément de fermeture (9) et le corps (6) définissent au moins un trou traversant (11) distinct de la au moins une ouverture traversante (7) et de l'anneau de connexion (10), l'élément de fermeture (9) séparant l'anneau de connexion (10) et le au moins un trou traversant (11).

## Patentansprüche

1. Klettergeschirr (1), umfassend einen Gurt (2), ein Paar Beinschlaufen (3) und erste und zweite seitliche Befestigungspunkte (4, 4a, 4b), bei denen mindestens der erste seitliche Befestigungspunkt (4a) einen am Gurt (11) befestigten Verbinder (5) umfasst, wobei der Verbinder (5) mit einem Körper (6) versehen ist, der mindestens eine Durchgangsöffnung (7) definiert, durch die ein Element (8) zur Befestigung am Gurt (2) hindurchgeht, **dadurch gekennzeichnet, dass** der Verbinder (5) mit einem Schließelement (9) versehen ist, das in Bezug zum Körper (6) lösbar montiert ist, und bei dem das Schließelement (9) und der Körper (6) definieren:
• einen Verbindungsring (10), der eine Verbindungsöffnung definiert, die zu der mindestens einen Durchgangsöffnung (7) verschieden ist, wobei der Verbindungsring (10) mit Hilfe des Schließelements (9) geschlossen wird, und
• mindestens ein Durchgangsloch (11), das zu der mindestens einen Durchgangsöffnung (7) und der Verbindungsöffnung verschieden ist, wobei das Schließelement (9) die Verbindungsöffnung von dem mindestens einen Durchgangsloch (11) trennt.

2. Klettergeschirr (1) nach Anspruch 1, bei dem das Schließelement (9) und der Körper (6) mindestens zwei Durchgangslöcher (11) definierten, die zu der mindestens einen Durchgangsöffnung (7) und dem Verbindungsring (10) verschieden sind, wobei das Schließelement (9) den Verbindungsring (10) und die mindestens zwei Durchgangslöcher (11) trennt, wobei die mindestens zwei Durchgangslöcher (11) vorteilhafterweise in einer Richtung senkrecht auf die Längsachse des Gurts (2) ausgerichtet sind.

3. Klettergeschirr (1) nach einem der Ansprüche 1 oder 2, bei dem das mindestens eine Durchgangsloch (11) teilweise durch eine Nut (6a) im Körper (6) und eine Nut (9a) im Schließelement (9) definiert ist.

4. Klettergeschirr (1) nach einem der vorhergehenden Ansprüche, bei dem der Körper (6) einen ersten Hohlraum (12) besitzt, der mit einem Ende (9b) des Schließelements (9) zusammenwirkt, so dass sich das Ende (9b) des Schließelements (9) in den ersten Hohlraum (12) einsetzt, um den Verbindungsring (10) zu schließen.

5. Klettergeschirr (1) nach einem der vorhergehenden Ansprüche, bei dem der Körper (6) einen zweiten Hohlraum (13) besitzt, der mit einer Durchgangsbohrung (14) des Schließelements (9) zusammenwirkt, so dass der zweite Hohlraum (13) in der Verlängerung der Durchgangsbohrung (14) ist, wenn das Schließelement (9) den Verbindungsring (10) schließt.

6. Klettergeschirr (1) nach der Kombination der Ansprüche 4 und 5, bei dem der zweite Hohlraum (13) und die Durchgangsbohrung (14) dazu vorgesehen sind, die Einführung eines Blockers (15) entlang einer Einführungsachse, die auf die Einführungsachse des Schließelements (9) in den ersten Hohlraum (12) senkrecht steht, zu gestatten.

7. Klettergeschirr (1) nach einem der vorhergehenden Ansprüche, bei dem der erste seitliche Befestigungspunkt (4a) ein Drahtelement (17) umfasst, dessen erstes Ende am ersten Verbinder (5) mit Hilfe des mindestens einen Durchgangsloches (11) befestigt ist, wobei das zweite Ende des Drahtelements (17) am zweiten seitlichen Befestigungspunkt (4b) befestigt ist.

8. Klettergeschirr (1) nach dem vorhergehenden Anspruch, bei dem das Drahtelement (17) einen ersten Teil mit einem kleineren Querschnitt als der Querschnitt des mindestens einen Durchgangsloches (11), um sich in das mindestens eine Durchgangsloch (11) einzufügen, und einen zweiten Teil mit einem größeren Querschnitt als der Querschnitt des mindestens einen Durchgangsloches (11) besitzt, um einen Blockieranschlag (B) zu bilden, wobei der Blockieranschlag (B) von dem zweiten seitlichen Befestigungspunkt (4b) durch den Verbinder (5) des ersten seitlichen Befestigungspunktes (4a) getrennt ist.

9. Klettergeschirr (1) nach einem der vorhergehenden Ansprüche, bei dem der Körper (6) eine erste Durchgangsöffnung (7), die an dem Gurt (2) durch ein erstes Befestigungselement (8) befestigt ist, und eine zweite Durchgangsöffnung (7), die an einer Beinschlaufe (3) durch ein zweites Befestigungselement befestigt ist, definiert.

10. Klettergeschirr (1) nach einem der vorhergehenden Ansprüche, bei dem der zweite seitliche Befestigungspunkt einen am Gurt (2) befestigten Verbinder (5) umfasst, wobei der Verbinder (5) mit einem Körper (6) versehen ist, der definiert:
• mindestens eine Durchgangsöffnung (7) durch die ein Element (8) zur Befestigung am Gurt (2) hindurchgeht,
• einen Verbindungsring (10), der zu der mindestens einen Durchgangsöffnung (7) verschieden ist, wobei der Verbindungsring (10) mit Hilfe eines lösbar montierten Schließelements (9) geschlossen wird,
und bei dem das Schließelement (9) und der Körper (6) mindestens ein Durchgangsloch (11) definieren, das zu der mindestens einen Durchgangsöffnung (7) und dem Verbindungsring (10) verschieden ist, wobei das Schließelement (9) den Verbindungsring (10) und das mindestens eine Durchgangsloch (11) trennt.

## Claims

1. Harness (1) comprising a belt (2), a pair of thigh loops (3) and first and second lateral attachment points (4, 4a, 4b), wherein at least the first lateral attachment point (4a) comprises a connector (5) fixed to the belt (2), the connector (5) being provided with a body (6) defining at least one pass-through opening (7) inside which an attachment element (8) to the belt (2) passes, **characterized in that** the connector (5) is provided with a closing element (9) mounted removable with respect to the body (6),
and wherein the closing element (9) and the body (6) define:
• a connection ring (10) defining a connection opening distinct from the at least one pass-through opening (7), the connection ring (10) being closed by means of a closing means (9) fitted in removable manner,
• at least one through hole (11) distinct from the at least one pass-through opening (7) and from the connection opening, the closing means (9) separating the connection opening and the at least one through hole (11).

2. Harness (1) according to claim 1, wherein the closing means (9) and the body (6) define at least two through holes (11) distinct from the at least one pass-through opening (7) and from the connection ring (10), the closing means (9) separating the connection ring (10) and the at least two through holes (11), the at least two through holes (11) advantageously being aligned in a perpendicular direction to the longitudinal axis of the belt (2).

3. Harness (1) according to either one of claims 1 or 2, wherein the at least one through hole (11) is defined partially by a groove (6a) in the body (6) and partially by a groove (9a) in the closing means (9).

4. Harness (1) according to any one of the foregoing claims, wherein the body (6) has a first cavity (12) collaborating with one end (9b) of the closing means (9) so that said end (9b) of the closing means (9) is inserted in the first cavity (12) to close the connection ring (10).

5. Harness (1) according to any one of the foregoing claims, wherein the body (6) has a second cavity (13) collaborating with a pass-through opening (14) of the closing means (9) so that the second cavity (13) is in the extension of the pass-through opening (14) when the closing means (9) closes the connection ring (10).

6. Harness (1) according to the combination of claims 4 and 5, wherein the second cavity (13) and the pass-through opening (14) are arranged to allow a clamp (15) to be inserted in a direction of insertion which is perpendicular to the direction of insertion of the closing means (9) in the first cavity (12).

7. Harness (1) according to any one of the foregoing claims, wherein the first lateral attachment point (4a) comprises a wire part (17) having a first end which is fixed to the first connector (5) by means of the at least one through hole (11), the second end of the wire part (17) being fixed to the second lateral attachment point (4b).

8. Harness (1) according to the foregoing claim, wherein the wire part (17) has a first part having a smaller cross-section than the cross-section of the at least one through hole (11) so as to be inserted in said at least one through hole (11) and a second part having a larger cross-section than the cross-section of the at least one through hole (11) so as to form a blocking stop (B), the blocking stop (B) being separated from the second lateral attachment point (4b) by the connector (5) of the first lateral attachment point (4a).

9. Harness (1) according to any one of the foregoing claims, wherein the body (6) defines a first pass-through opening (7) fixed to the belt (2) by a first attachment means (8) and a second pass-through opening (7) fixed to a thigh strap (3) by a first attachment means.

10. Harness (1) according to any one of the foregoing claims, wherein the second lateral attachment means comprises a connector (5) fixed to the belt (2), the connector (5) being provided with a body (6) defining:
• at least one pass-through opening (7) inside which an attachment means (8) to the belt (2) passes,
• a connection ring (10) distinct from the at least one pass-through opening (7), the connection ring (10) being closed by means of a closing means (9) fitted in removable manner,
and wherein the closing means (9) and the body (6) define at least one through hole (11) distinct from the at least one pass-through opening (7) and from the connection ring (10), the closing means (9) separating the connection ring (10) and the at least one through hole (11).
